# EUROPEAN PATENT APPLICATION

(11) **EP 2 698 748 A1**
(43) Date of publication of application: **19.02.2014**
(21) Application number: 12368019.1
(22) Date of filing: 14.08.2012
(51) Int. Cl.: G06Q 10/02

(54) **Itinerary analysis for passenger re-accommodation**

(71) Applicant: Amadeus S.A.S., 06410 Biot (FR)
(72) Inventor: The designation of the inventor has not yet been filed
(74) Representative: Cases, Jean-François

(57) **Abstract**

Systems, methods, and computer program products for analyzing itineraries to re-accommodate passengers in the event of a flight schedule change. A schedule change is received for an impacted flight and a plurality of original itineraries that include the impacted flight are identified. The computer reservation system is used to simulate application of a default travel solution that replaces the impacted flight in the original itinerary of each passenger to define a replacement itinerary. Each replacement itinerary is assessed for compliance with a plurality of validity conditions. For each replacement itinerary that fails to comply with at least one of the validity conditions, one or more replacement travel solutions are computed each connecting the origin location with the destination location and each subject to satisfying at least one constraint on one or more flights comprising each replacement travel solution.

## Description

### BACKGROUND

The present invention relates to computers and computer software and, more specifically, to systems, methods and computer program products for re-accommodating multiple passengers with an itinerary impacted by a flight schedule change.

Computer reservations systems are used to store and retrieve information and to conduct transactions related to air travel. A computer reservation system may be used for the reservations of a particular airline. Alternatively, a computer reservation system may comprise a global distribution system that supports travel agencies and other distribution channels in making reservations for multiple airlines in a unified system. Passenger travel may be booked using the computer reservation system and, in addition, departures and arrivals can be managed.

Various types of schedule changes can prompt a need for a computer reservation system to rebook multiple passengers with travel schedules disrupted by events outside of passenger control. Exemplary events that may cause schedule changes include flight schedule changes to re-optimize the airline network (e.g., in case of agreements between code share or alliance partners), routing and equipment changes, and flight delays or cancellations arising from mechanical problems with equipment, crew availability, or weather conditions.

In response to a flight schedule change, the computer reservation system is used to reschedule impacted passengers on another flight to replace the changed original flight. The re-accommodation process updates the passenger name record (PNR) containing the itinerary of each impacted passenger in a database of the computer reservation system. Default travel solutions for re-accommodating the impacted passengers may only consider the flight segment subject to the schedule change. A typical default travel solution is to designate a single alternate replacement flight or set of replacement flights to re-accommodate all impacted passengers originally booked on the flight that is impacted by the schedule change. As space permits, all impacted passengers are re-booked as a group on the alternate replacement flight or flights.

While passengers may be simplistically re-accommodated by the default travel solution, the full itinerary of each passenger is not considered. Instead, the default travel solution merely resolves the effect of the impacted flight and ignores the introduction of potential misconnections triggered by the designation of the same travel solution for all impacted passengers. An agent must verify whether or not the default travel solution introduces a new misconnection, which may be costly because of a need for manual intervention by the agent. This time required to re-accommodate all of the passengers may also be prolonged because the impact on each individual passenger itinerary must be manually assessed on a case-by-case basis in the aftermath of the flight schedule change.

As airline networks progressively become more hub oriented, an increasing number of passenger reservations may be comprised of multiple connecting segments that are each susceptible to being impacted by a flight schedule change. Furthermore, the sheer number of passenger itineraries impacted by a flight schedule change can be extremely large. Under these conditions and with the existing process, the default re-accommodation solution can introduce a large number of travel misconnections and may even invalidate several itineraries. Schedule changes can cause customer dissatisfaction and potential revenue loss because of disruption compensation, such as food coupons, hotel vouchers, and the like.

Improved systems, methods, and computer program products are needed for analyzing itineraries to re-accommodate passengers impacted by a flight schedule change.

### SUMMARY

According to one embodiment of the present invention, a method is provided for re-accommodating a plurality of passengers. The method includes receiving a schedule change for an impacted flight at a computer reservation system and retrieving a plurality of original itineraries between an origin location and a destination location that include the impacted flight. The method further includes simulating using at least one processor of the computer reservation system application of a default travel solution that replaces the impacted flight in the original itinerary of each passenger to define a replacement itinerary. Each replacement itinerary is assessed for compliance with a plurality of validity conditions. The method further includes, for each replacement itinerary that fails to comply with at least one of the validity conditions, computing one or more replacement travel solutions each connecting the origin location with the destination location and each subject to satisfying at least one constraint on one or more flights comprising each replacement travel solution.

According to one embodiment of the present invention, an apparatus includes at least one processor and program code configured to be executed by the at least one processor to re-accommodate a plurality of passengers. The program code is configured receive a schedule change for an impacted flight at a computer reservation system, retrieve a plurality of original itineraries between an origin location and a destination location that include the impacted flight, simulate application of a default travel solution that replaces the impacted flight in the original itinerary of each passenger to define a replacement itinerary, assess compliance of each replacement itinerary with a plurality of validity conditions, and, for each replacement itinerary that fails to comply with at least one of the validity conditions, compute one or more replacement travel solutions each connecting the origin location with the destination location and each subject to satisfying at least one constraint on one or more flights comprising each replacement travel solution.

The process and system automating the re-accommodation process automatically takes control of disruptions arising from flight changes and provides customized adjustments to itineraries that consider the entire passenger itinerary, not merely the changed flight. The re-accommodation process and system may incorporate predefined re-accommodation priorities and rules set by the host airline, improves operational efficiency, reduces call volumes for reservations, reduces overnight hotel costs, decreases compensation costs resulting from unsatisfactory actions, and results in fewer disrupted or stranded passengers for ticket agents and gate agents to manually handle. Customer satisfaction may be enhanced by recommending the optimal alternative passenger itineraries, and by minimizing the overall impact of schedule disruptions on passengers.

### BRIEF DESCRIPTION OF THE SEVERAL VIEWS OF THE DRAWINGS

The accompanying drawings, which are incorporated in and constitute a part of this specification, illustrate various embodiments of the invention and, together with a general description of the invention given above and the detailed description of the embodiments given below, serve to explain the embodiments of the invention.

FIG. 1 is a block diagram of a global distribution system that includes a re-accommodation server, a schedule server, a reservation server, and an inventory server configured to perform passenger re-accommodation consistent with embodiments of the invention.

FIG. 2 is a block diagram of the re-accommodation server of FIG. 1.

FIG. 3 is a block diagram of the itinerary analysis module of the re-accommodation server of FIG. 2.

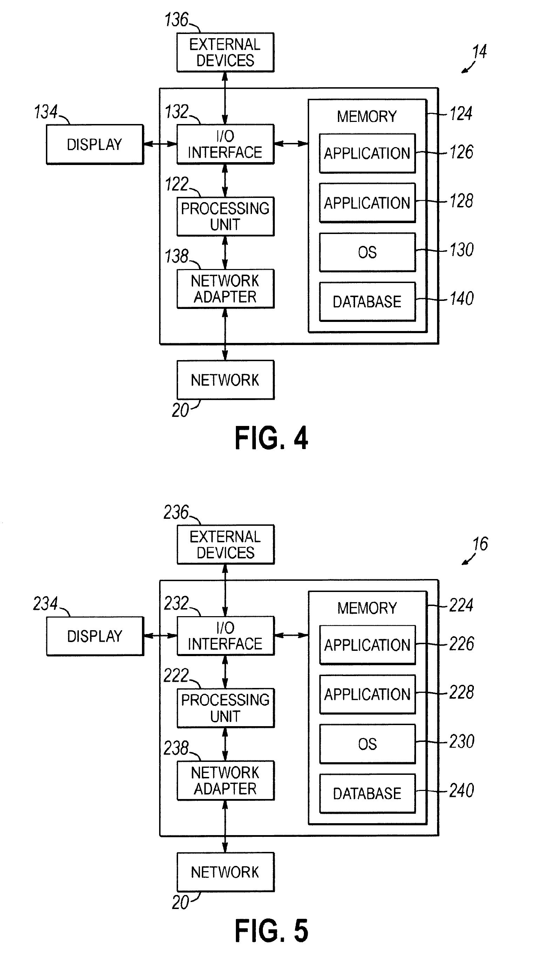

FIG. 4 is a block diagram of the schedule server of FIG. 1.

FIG. 5 is a block diagram of the inventory server of FIG. 1.

FIG. 6 is a flowchart illustrating a flow of operations that may be performed by the servers of FIG. 1 as a procedure to process a flight schedule change.

### DETAILED DESCRIPTION

Generally, embodiments of the invention relate to computerized re-accommodation processing systems and methods that guarantee the validity of passenger itineraries while optimizing the solution in comparison with the default travel solution. In particular, the default travel solutions set by the airline inventory are simulated and passenger misconnections are automatically corrected considering the entirety of the itinerary of each impacted passenger. This automatic correction may greatly improve the efficiency of the re-accommodation process for travel agents, airline agents, and passengers, especially given the massive overall number of passengers that may potentially be impacted. Schedule changes subject to being handled by the embodiments of the invention include, but are not limited to, seasonal schedule changes that may impact passengers over an extent of many days, operational schedule changes to flights near departure in which re-assignment of passenger needs acute attention and reaction, and regular schedule changes.

An itinerary or journey includes all points of planned air travel included in a single travel trip between an origin location and a destination location. An itinerary comprises a plurality of connections. Each connection is a clearly identifying part of an itinerary usually between a city pair and involving one departure and one arrival. At each connection point between consecutive flights, the passenger changes planes and typically changes flight numbers. The default travel solution built by the re-accommodation server 12 may each comprise a single flight segment or multiple flight segments. Similarly, the replacement travel solution built by the re-accommodation server 12 may each comprise a single flight segment or multiple flight segments. Each flight segment represents a flight between two airports using a single flight number, regardless of the number of intermediate stops or changes of planes.

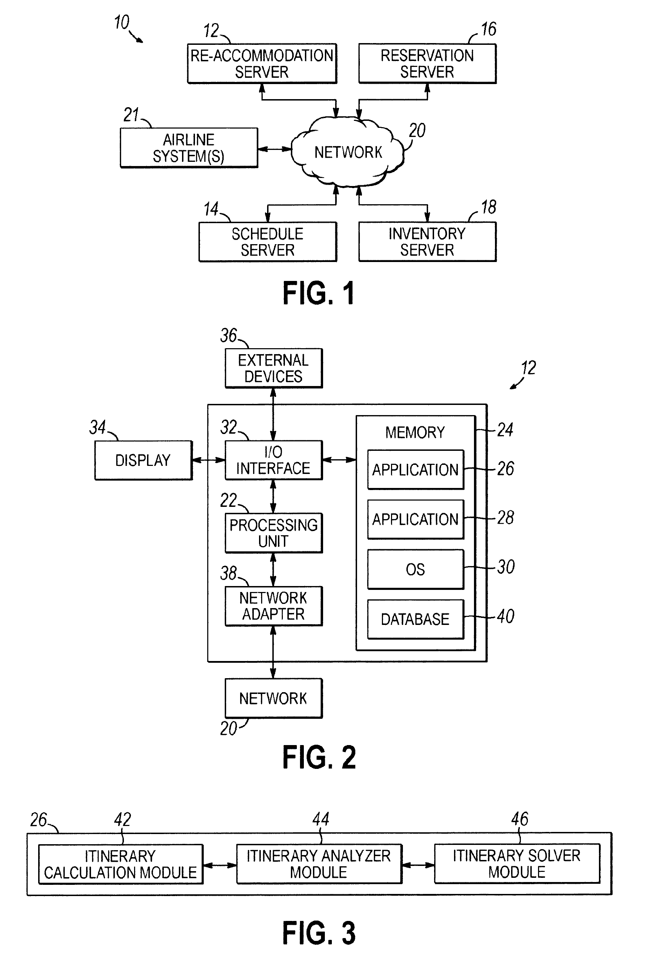

With reference to FIG. 1, computerized reservation system (CRS) 10 includes a re-accommodation server 12, a schedule server 14, a reservation server 16, and an inventory server 18 that are configured to function to analyze passenger itineraries in the event of a flight schedule change and to provide alternative replacement itineraries consistent with embodiments of the invention. The CRS 10 may be used to store and retrieve information and conduct on-line transactions related to goods and services, such as the online purchase of tickets for air travel initiated by a customer accessing a travel service provider. In the context of air travel, the CRS 10 is configured to respond to itinerary queries from the travel service provider, such as a travel agent, by identifying particular flights that satisfy a given itinerary, and to make or book reservations. The CRS 10 may be embodied in a global distribution system (GDS), which is a type of CRS that books and sells air travel tickets for multiple airlines.

The CRS 10 includes a re-accommodation system or server 12, a schedule system or server 14, a reservation system or server 16, and an inventory system or server 18 that are interconnected with each other over a communication network 20. One or more of the servers 12, 14, 16, 18 may communicate over the communication network 20 with clients in the representative form of one or more airline systems 21 and may receive a schedule change from any of the one or more airline systems 21 for analysis and processing to provide re-accommodated itineraries to passengers impacted by the schedule change. Passengers are booked and ticketed through the reservation server 16 and have original itineraries, as a result of the ticketing, that are susceptible to disruption by a flight schedule change.

Network 20 generally comprises one or more interconnected communication networks, including for example, a local area network (LAN), a wide area network (WAN), a public network (e.g., the Internet using an Internet Service Provider), an enterprise private network, and/or combinations thereof. Network interfaces of the servers 12, 14, 16, 18 may employ one or more suitable communication protocols defining rules and data formats for exchanging information and communicating over the network 10, such as User Datagram Protocol/Internet Protocol (UDP/IP), and/or Transmission Control Protocol/Internet Protocol (TCP/IP). The servers 12, 14, 16, 18 may connect to the network 10 via a hardwired link, such as an IEEE 802.3 (Ethernet) link, a wireless link using a wireless network protocol, such as an 802.11 (Wi-Fi) link, or any other suitable link for interfacing with the network 10.

The servers 12, 14, 16, 18 may generally comprise one or more interconnected computing devices/systems located locally and/or remotely and configured to perform one or more operations associated with the servers 12, 14, 16, 18. For example, while the servers 12, 14, 16, 18 have been illustrated as individual computing systems, embodiments of the invention are not so limited.

With reference to FIG. 2 in which like reference numerals refer to like features in FIG. 1 and in accordance with an embodiment of the invention, the re-accommodation server 12 includes one or more processing units 22 for executing one or more instructions to perform and/or interact with servers 14, 16, 18 to perform one or more operations consistent with embodiments of the invention. The re-accommodation server 12 includes a memory 24 accessible by the one or more processing units 22. The memory 24 stores applications 26, 28 and/or an operating system 30, where the applications 26, 28 and/or operating system 30 generally comprise one or more instructions stored as program code that may be read from the memory 24 by each processing unit 22 and which may cause each processing unit 22 to perform one or more operations when executed by the processing unit 22 to thereby perform the steps necessary to execute steps, elements, and/or blocks embodying the various aspects of the invention.

The memory 24 may represent random access memory (RAM) comprising the main storage of a computer, as well as any supplemental levels of memory, e.g., cache memories, non-volatile or backup memories (e.g., programmable or flash memories), mass storage memory, read-only memories (ROM), etc. In addition, the memory 24 may be considered to include memory storage physically located elsewhere, e.g., cache memory in a processing unit of any computing system in communication with the re-accommodation server 12, as well as any storage device on any computing system in communication with the re-accommodation server 12 (e.g., a remote storage database, a memory device of a remote computing device, cloud storage, etc.).

Re-accommodation server 12 further includes an input/output ("I/O") interface 32, a display 34, and external devices 36. The I/O interface 32 of re-accommodation server 12 may be configured to receive data from the display 34 and external devices 36 that is communicated to the processing unit 22 and may configured to output data from the processing unit 22 to the display 34 and external devices 36. The display 34 may be used to permit a user to receive output data from re-accommodation server 12 and to supply input data to the re-accommodation server 12. The external devices 36 may include, for example, additional user input devices such as a keyboard, mouse, microphone, etc., and additional user output devices such as speakers, a mouse, etc. The re-accommodation server 12 may also include a network adapter 38 that supplies the physical connection with the network 20 and that is configured to transmit data to one or more of the servers 14, 16, 18 and/or receive data from one or more of the servers 14, 16, 18 over the network 20.

The memory 24 also includes a data structure in the form of a database 40 that may be arranged with any database organization and/or structure, including for example a relational database, a hierarchical database, a network database, and/or combinations thereof. A database management system in the form of a computer program that, when executing as instructions on the processing unit 22, is used to access the information or data stored in records of the database 40.

Application 26 may comprise an itinerary analysis module that is configured to respond to an analysis the full itinerary of each passenger impacted by a flight change and then to create or provide new personalized itineraries for each impacted passenger. Application 28 may comprise an execution module that is configured to implement the personalized itineraries determined by the application 26.

The itinerary analysis module embodied in application 26 may comprise an itinerary calculation module 42, an itinerary analyzer module 44, and an itinerary solver module 46 that cooperate and collaborate to provide the personalized itineraries. In the representative embodiment, the modules 42, 44, 46 are parceled into distinct components using modular programming techniques. However, the software design may decrease the extent to which the modules 42, 44, 46 are distinct by combining at least some program functions of multiple modules into a single module.

Itinerary calculation module 42 determines a list of itineraries of passengers impacted by the flight schedule change. Itinerary calculation module 42 automatically categories or classifies the passengers between inbound connections with the impacted flight, outbound connections with the impacted flight, and both inbound and outbound connections with the impacted flight. Within each category, itinerary calculation module 42 calculates a number of impacted passengers.

Itinerary analyzer module 44 simulates the application of a default re-accommodation travel solution on each of the passenger itineraries identified by the operation of itinerary calculation module 42. For example, the default re-accommodation travel solution may only consider the flight subject to the schedule change and the simulation may reschedule impacted passengers on a single alternate flight designated to re-accommodate all impacted passengers originally ticketed on the flight that is the subject of the schedule change. Itinerary analyzer module 44 computes the resulting replacement itineraries for each passenger based upon the replacement of the impacted flight by the default travel solution.

Itinerary analyzer module 44 may detect itineraries that are invalid because of modification to the passenger's original itinerary resulting from the simulated introduction of the default travel solution. Specifically, itinerary analyzer module 44 detects invalid itineraries by assessing the compliance of each replacement itinerary with a set of validity conditions following the application of the default travel solution and rejecting replacement itineraries that fail to satisfy at least one validity condition from the condition set.

In one embodiment, some of the validity conditions may be time-based conditions. One such time-based condition for evaluating each replacement itinerary may be that the replacement itinerary is invalid if the alternate flight introduces a journey misconnection (i.e., a missed connection). For example, the arrival time of the alternative flight at the destination location may be after the departure time of an outbound connecting flight or the departure time of the alternative flight from the origin location may be before the arrival time of an inbound connecting flight. Another such time-based condition for evaluating each replacement itinerary may be that a replacement itinerary is invalid because the alternate flight breaks a minimum connecting time at the airport. The minimum connecting time represents an absolute minimum amount of time during which an airport has determined that a physically strong and healthy person can make a connection to a continuing flight during a layover. Minimum connecting time may be based upon factors such as airport layout and terminal changes, security checks, etc. and whether the connection is between combinations of international or domestic flights. Yet another such time-based condition for evaluating each replacement itinerary is that a replacement itinerary is invalid if a maximum ground time between connecting flights, which is set by each airline, is exceeded.

In one embodiment, some of the validity conditions may not be based on time. A time-independent condition for evaluating each replacement itinerary is that a replacement itinerary is invalid if the number of segments is increased beyond a customizable limit set by the airline. Yet another such time-independent condition for evaluating each replacement itinerary is that a replacement itinerary is invalid if one or more airline product distribution rules are not fulfilled. For example, traffic restrictions may be a product distribution rule that is verified for fulfillment. As another example, an airline may not permit an alternative flight to be being booked in isolation but instead may require that the potential alternate flight be booked in combination with a connection.

For each replacement itinerary identified as invalid by the itinerary analyzer module 44, the itinerary solver module 46 is called to automatically compute a valid replacement travel solution that considers the entire itinerary for the passenger journey and that serves as an alternative replacement itinerary for the original itinerary. Specifically, itinerary solver module 46 finds a replacement travel solution that approximates the original itinerary. The ability to automatically detect those passengers assigned an invalid itinerary and to automatically generate a replacement travel solution for each invalid itinerary may improve passenger satisfaction with the re-accommodation process and may minimize airline revenue loss.

The itinerary solver module 46 may use the alternative flight selection engine embodied in application 128 of the schedule server 14 to calculate a replacement travel solution for a given origin location and destination location specified by the itinerary having the impacted flight. An airline carrier may specify business rules used to tailor or customize the itinerary analysis process by limiting the scope of the automatic search for each replacement travel solution. Exemplary business rules include, but are not limited to, an eligible flight rule, an excluded flight rule, an elevated level of priority for flights close to the original departure time, a direct time frame rule for the flights, an elevated level of priority for direct flights as opposed to connecting flights, a departure time range rule for the flights, an elapsed flying time rule for the flights, and a rule setting a level of acceptable increase in elapsed flying time for the flights. The business rules can be easily updated through the display 34 and external devices 36 by an airline agent using, for example, a graphical user interface.

The eligible flight rule permits an airline carrier to identify specific flight numbers of pre-defined flights as eligible flights specifically included as possible flights of the replacement travel solution. The excluded flight rule permits an airline carrier to identify specific flight numbers of pre-defined flights as ineligible flights specifically disqualified as possible flights of the replacement travel solution.

The direct time frame rule assigns priority to possible alternate flights contingent upon whether the flight is a direct flight or a connecting flight. The direct time frame rule permits the alternative flight selection engine of application 128 to choose between direct flights only or direct flights in a certain period of time before considering connections if needed. An indicator can be set by the itinerary solver module 46 to specify if the search performed by the alternative flight selection engine of application 128 should consider connecting flights or not. A direct time frame value parameter can be set by itinerary solver module 46 to indicate the time frame during which direct flights are considered to be better replacement flight than flights with connections.

The departure time range rule defines a time range around the original flight departure time in order to give additional priority to solutions departing within this time range. The elapsed flying time rule defines a maximum elapsed flying time that is acceptable for a given replacement flight. The elapsed flying time rule may be based on the elapsed flying time of the original flight impacted by the schedule change.

If the itinerary modified to include the default travel solution is invalidated by failing one or more of the validity conditions, the itinerary solver module 46 may cause the schedule server 14 to determine a replacement travel solution to respond to the occurrence of the impacted flight. In one embodiment, the itinerary solver module 46 may make a plurality of determinations each characterized by one or more constraints. Each set of constraints may be constructed by itinerary solver module 46 using one of the business rules or a combination of the business rules. The constraints for the successive determinations are different and successive sets of constraints may be ordered in terms of progressively or incrementally reduced strictness. To perform each determination, itinerary solver module 46 calls the schedule server 14 to execute a procedure that computes itineraries satisfying the constraints associated with the particular determination.

The schedule server 14, reservation server 16, and inventory server 18 are each constructed similarly to the re-accommodation server 12. The inventory server 18 includes a database that maintains a count of the number of seats that a carrier has available for sale at any given time for any given flight.

The schedule server 14 includes one or more processing units 122 similar or identical to one or more processing units 22 for executing one or more instructions to perform and/or interact with servers 12, 16, 18 to perform one or more operations consistent with embodiments of the invention. The schedule server 14 includes a memory 124, which is similar or identical to memory 24, accessible by the one or more processing units 122. The memory 124 stores applications 126, 128 and and/or an operating system 130, where the applications 126, 128 and/or operating system 130 generally comprise one or more instructions stored as program code that may be read from the memory 124 by each processing unit 122 and which may cause each processing unit 122 to perform one or more operations when executed by the processing unit 122 to thereby perform the steps necessary to execute steps, elements, and/or blocks embodying the various aspects of the invention. Application 126 may comprise a schedule application module that is configured to coordinate the application and publication of the schedule change with the inventory, reservation and re-accommodation servers. Application 128 may comprise an automated flight solution module that is configured to compute replacement travel solutions.

The memory 124 also includes a data structure in the form of a database 140 that may be arranged with any database organization and/or structure, including for example a relational database, a hierarchical database, a network database, and/or combinations thereof. Schedule server 14 further includes an input/output ("I/O") interface 132 similar or identical to I/O interface 32, a display 134 similar or identical to display 34, and external devices 136 similar or identical to external devices 36. The schedule server 14 may also include a network adapter 138 that supplies the physical connection with the network 20 and that is configured to transmit data to one or more of the servers 12, 16, 18 and/or receive data from one or more of the servers 12, 16, 18 over the network 20.

The reservation server 16 includes one or more processing units 222 similar or identical to one or more processing units 22 for executing one or more instructions to perform and/or interact with servers 12, 14, 18 to perform one or more operations consistent with embodiments of the invention. The reservation server 16 includes a memory 224, which is similar or identical to memory 24, accessible by the one or more processing units 222. The memory 224 stores applications 226, 228 and and/or an operating system 230, where the applications 226, 228 and/or operating system 230 generally comprise one or more instructions stored as program code that may be read from the memory 224 by each processing unit 222 and which may cause each processing unit 222 to perform one or more operations when executed by the processing unit 222 to thereby perform the steps necessary to execute steps, elements, and/or blocks embodying the various aspects of the invention.

The memory 224 also includes a data structure in the form of a database 240 that may be arranged with any database organization and/or structure, including for example a relational database, a hierarchical database, a network database, and/or combinations thereof. The data structure of database 240 may comprise a plurality of records, namely passenger name records (PNR) each containing the itinerary for a passenger. Application 226 may comprise a PNR selection module that is configured to query the database 240 to search the itineraries impacted by a flight change and to retrieve those itineraries. Application 228 may comprise a PNR update module that is configured to update the itineraries to reflect, for example, passenger re-accommodations.

Reservation server 16 further includes an input/output ("I/O") interface 232 similar or identical to I/O interface 32, a display 234 similar or identical to display 34, and external devices 236 similar or identical to external devices 36. The reservation server 16 may also include a network adapter 238 that supplies the physical connection with the network 20 and that is configured to transmit data to one or more of the servers 12, 14, 18 and/or receive data from one or more of the servers 12, 14, 18 over the network 20.

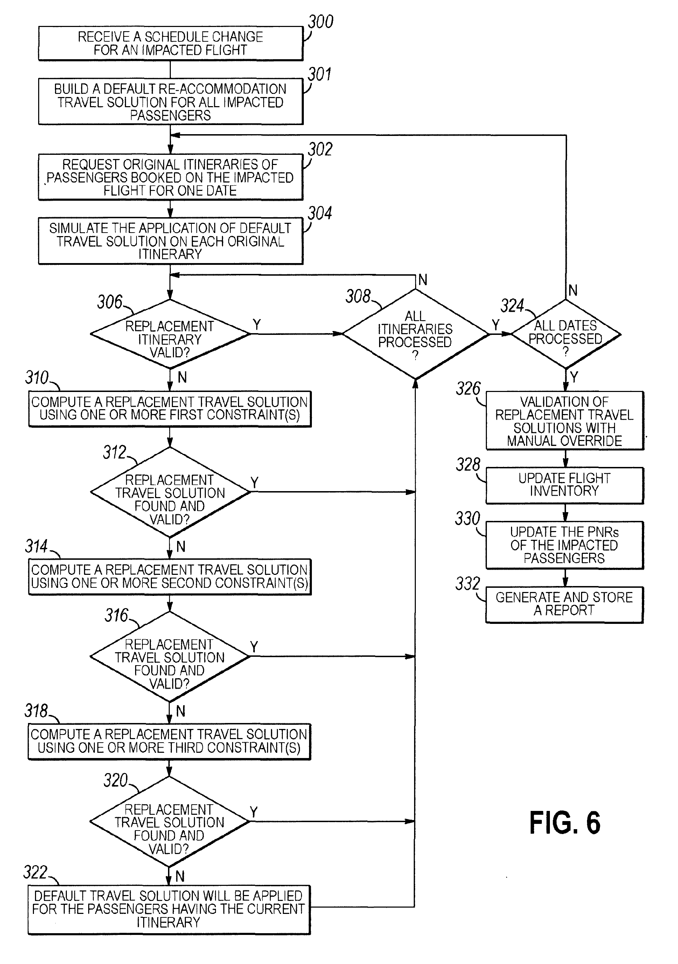

With reference to FIG. 6, the receipt and processing of a schedule change by the CRS 10 will be described. The schedule server 14 may receive a schedule change for a flight that is communicated from one of the airline systems 21 over the network 108 (block 300). The flight schedule change may occur on one or more flight dates and, in the representative embodiment, the changed flight may occur on multiple future dates. In response to receipt, the schedule server 14 processes the schedule change and then communicates the schedule change to the re-accommodation server 12. The re-accommodation server 12 builds a default travel solution for the flight impacted by the schedule change, which is the same travel solution for all impacted passengers (block 301). After the creation of this default travel solution, the re-accommodation server notifies the schedule server 14, which continues the application of the schedule change. Upon this notification, the schedule server 14 publishes the schedule change to the reservation server 16 and the inventory server 18. Then, the schedule server 14 may split the schedule change by date so that re-accommodation is treated for each separate date in parallel and, for each date, requests to the re-accommodation server 12 to execute the re-accommodation process.

For a particular one of the dates on which the schedule change occurs, the re-accommodation server 12 receives itineraries from the reservation server 16 for those passengers booked on the changed flight (block 302). In response to the request from the re-accommodation server 12, the reservation server 16 searches the PNR's in its database 240 to identify passengers booked on the changed flight on that particular date. The original itineraries of the passengers are classified among a plurality of groups - inbound flight connections, outbound flights connections, and both inbound and outbound flight connections. For example, the inbound flight connections group corresponds to all itineraries having only one or several inbound flights connecting to the flight impacted by the schedule change. The number of impacted passenger itineraries in each group is calculated. The reservation server 16 communicates the results of the query to the re-accommodation server 12 such that the re-accommodation server 12 receives the original itineraries for passengers that must be re-accommodated on the particular date due to the schedule change.

An execution trigger is then sent from the execution module 28 to the itinerary analysis module 26 of the re-accommodation server 12. Upon receipt of the execution trigger, the itinerary analysis module 44 of the re-accommodation server 12 is activated to simulate the application of the default travel solution on all impacted passenger itineraries, to compute the resulting itineraries, and to automatically identify invalid itineraries among the resulting itineraries of the impacted passengers (block 306). The simulated default travel solution built by the re-accommodation server 12 may comprise a single flight segment or multiple flight segments. Each flight segment represents a flight between two airports using a single flight number, regardless of the number of intermediate stops or changes of planes.

The validity check is performed after the execution of the schedule change but before the execution of a resolution plan that specifies replacement travel solutions for re-accommodation. The validity check assesses compliance of the future replacement itinerary including the simulated default travel solution with a plurality of validity conditions. A replacement itinerary is considered as invalid if the replacement itinerary fails to comply with at least one validity condition from among the plurality of validity conditions.

An exemplary validity condition is that a journey misconnection does not result from the introduction of the default travel solution into a replacement itinerary. In this instance, a journey misconnection may result if one of the connecting times of the replacement itinerary is negative in that, for example, a flight of the default travel solution has an arrival time later than the departure time of the next connection. Another exemplary validity condition is that a connection, while not having a negative connecting time, is not considered at an elevated risk of resulting in a journey misconnection because of the introduction of the default travel solution into a replacement itinerary. For example, a replacement itinerary may be invalid if one of the connecting times is less than a minimum connecting time that should be honored for a given airport. As a numerical example, if a minimum connecting time between different terminals of an airport is one hour, then a valid connection between flight segments of the replacement itinerary arriving and departing at these different terminals must be separated by at least one hour between the arrival of the first segment and the departure of the second segment.

Another exemplary validity condition is that a connection time between connecting flight segments in the replacement itinerary is not higher than a maximum ground time increase specified by an airline. Each connection of the replacement itinerary must respect this maximum additional value in order to be valid. Another exemplary validity condition is that the number of flight segments in the replacement itinerary is not increased by the introduction of the default travel solution into the itinerary beyond a threshold specified by the airline through a parameter. Minimizing the number of flights through operation of this condition may improve passenger satisfaction by anticipating an improved solution through the itinerary analysis process. Yet another exemplary validity condition is that all flight segments of the replacement itinerary fulfill air traffic restrictions.

If the replacement itinerary is established to be valid, then the replacement itinerary process is exited for consideration of whether all invalid itineraries have been processed (block 308).

For each replacement itinerary determined by the itinerary analyzer module 44 to be invalid, the itinerary solver module 46 of application 26 is automatically triggered by the re-accommodation server 12 to replace the original itinerary with one or more replacement travel solutions that do not include the default travel solution. Each replacement travel solution should have the same departure and arrival locations as the original itinerary and the same departure date as the original itinerary. The itinerary solver module 46 of re-accommodation server 12 calls the automated flight solution module embodied in application 128 of the schedule server 14 one or more times to compute the one or more replacement travel solutions. At least one constraint is supplied in each call for use by the automated flight solution module in the computation of one or more flights for candidate replacement travel solutions.

Each constraint on potential replacement travel solutions may be based upon business rules of the airline carrier, as discussed hereinabove. For example, a potential replacement travel solution may be disregarded by the automated flight solution module because the flight number of a flight of the replacement travel solution belongs to a pre-defined list of excluded flights specified by the airline. As another example, each flight in a potential replacement travel solution may be required to belong to one of the flight numbers specified by an eligible flight rule. As yet another example, only non-connecting flights may be selected in each potential replacement travel solution if the direct-only indicator is specified in the direct time frame rule. If the direct-only indicator is not specified in the direct time frame rule, then the connecting flights in each potential replacement travel solution should have a transfer time at each connect point that is less than the transfer time specified by the maximum ground time rule and should respect the minimum connecting time rule. As another example, the elapsed flying time rule may be used to determine whether the elapsed flying time of each flight in a potential replacement itinerary is acceptable.

If multiple replacement travel solutions are specified in any call to the automated flight solution module, the automated flight solution module may then rank the replacement travel solutions according to one or more criteria. For example, one criterion may be that the time range for each replacement travel solution is compared to the time range for the original itinerary. Another criterion may be considering the convenience of direct flights as opposed to connecting flights when ranking the various replacement travel solutions. Another criterion for the ranking may be the difference between the departure time of each replacement travel solution and the departure time of the original itinerary. Another criterion for the ranking may be the number of connections in the various replacement travel solutions. Yet another criterion for ranking may be the elapsed flying time of the various replacement travel solutions. The rankings may be prioritized or applied, for example, in the order of discussion of each individual criterion. The best or highest ranked replacement travel solution may be kept or, alternatively, a group of the highest ranked replacement travel solutions may be kept.

In a representative embodiment, the automated flight solution module embodied in application 128 of the schedule server 14 is called multiple times (e.g., three times) by the itinerary solver module 46 of re-accommodation server 12. As discussed hereinabove, each call to the automated flight solution module includes one or more constraints, and the one or more constraints associated with each call are different. For each call, the automated flight solution module embodied in application 128 determines a list of one or more potential replacement travel solutions by scanning the global reservation flight schedules subject to satisfying the particular one or more constraints that are specified by the call.

The succession of calls to the automated flight solution module embodied in application 128 may be ordered according to strictness. Successive calls to the automated flight solution module may then progressively or incrementally release or relax the applied constraints in order to broaden the scope of the search and, thereby, to increase the pool of replacement travel solutions with each successive computation of replacement travel solutions. As soon as one or more replacement travel solutions are found or if all of the successive calls have been exhausted, the procedure is concluded.

In a first determination of the process, the itinerary solver module 46 of re-accommodation server 12 calls the automated flight solution to compute one or more replacement travel solution that satisfy one or more constraints (block 310). In one embodiment, the one or more constraints may function to freeze or preserve a main flight of the passenger's original itinerary in each replacement travel solution. The main flight may be a long haul represented by an international flight or a flight with a higher flying time, and may generate most of the revenue of the itinerary for the airline carrier. The determination replaces inbound or/and outbound connections and tries to find a replacement travel solution that keeps the main flight fixed. The replacement travel solution includes any flight that feeds the main flight and any flight that is a receiver of the main flight. The one or more constraints may include a requirement that the number of segments is not increased compared to the passenger's original itinerary. The one or more constraints may comprise invoking the eligible flight rule, elapsed time of itinerary rule, and excluded flight rule. However, the set of constraints does not invoke the departure time range rule and the direct time frame rule. The replacement itinerary also resembles the passenger's original itinerary because the main flight is common to both the original itinerary and the replacement travel solution.

If at least one replacement travel solution is received from schedule server 14, itinerary solver module 46 may cause itinerary analyzer module 44 to analyze each replacement travel solution for compliance with validity conditions, as discussed hereinabove. Any replacement travel solution that fails to comply at least one of the validity conditions is rejected as invalid (block 312). If at least one replacement travel solution is established to be valid and to comply with all of the validity conditions, then the process is exited after the first determination for consideration of whether all itineraries including the default travel solution have been processed (block 308). If either at least one replacement travel solution is not found or none of the replacement travel solutions found is valid (i.e., a null result), then the itinerary solver module 46 continues the re-accommodation process in block 314.

In a second determination of the process, the itinerary solver module 46 of re-accommodation server 12 calls the automated flight solution to compute one or more replacement travel solutions that satisfies one or more constraints (block 314). The one or more constraints of the second determination may differ from the one or more constraints of the first determination. In one embodiment, the constraints for the second determination may include that the routing of the passenger's original itinerary is fixed or preserved in each replacement travel solution computed by schedule server 14 so that the routing of the original itinerary is maintained but none of the flights of the original itinerary are maintained in the replacement travel solutions. While the one or more constraints of the second determination are relaxed compared to the one or more constraints of the first determination, the fixed routing requires the flights of each replacement travel solution in the second determination to maintain the connecting points of the passenger's original itinerary. As a result, the number of segments of a compliant replacement travel solution found by the second determination is not increased compared to the passenger's original itinerary.

In the second determination, each replacement travel solution may potentially replace all flights of the original itinerary with flights of different times but on the same routing as the original itinerary. The departure date from the origin location of the initial segment of each replacement travel solution may be the same as the initial segment of the original itinerary. The one or more constraints may invoke the departure time rule, elapsed time of itinerary rule, and excluded flight rule. However, the one or more constraints of the second determination do not invoke the eligible flight rule or the direct time frame rule.

If at least one replacement travel solution is received from schedule server 14, itinerary solver module 46 may cause itinerary analyzer module 44 to analyze each replacement travel solution from the second determination for compliance with validity conditions, as discussed hereinabove. Each replacement travel solution from the second determination that fails to comply with at least one validity condition is rejected as invalid (block 316). If at least one replacement travel solution from the second determination is established to be valid, then the process is exited after the second determination for consideration of whether all itineraries including the default solution have been processed (block 308). If either a replacement travel solution is not found by the second determination or none of replacement travel solutions found by the second determination are valid (i.e., a null result), then itinerary solver module 46 continues the re-accommodation process in block 318.

In a third determination of the process, the itinerary solver module 46 of re-accommodation server 12 calls the automated flight solution to compute one or more replacement travel solutions that satisfy one or more constraints (block 318). The one or more constraints for the third determination are more lenient than the one or more constraints for the first determination and the one or more constraints for the second determinations. In one embodiment, the third determination is characterized by removing any constraint on the flights or the routing and instead imposing only a minimal constraint that the origin and destination locations of the passenger's original itinerary are maintained in the replacement travel solution. Specifically, the one or more constraints of the third determination consist of a set of business rules constructed to permit replacement of all flights of the entire original itinerary with different flights in each replacement travel solution. The constraints invoke the departure time range rule, direct time frame rule, elapsed time of itinerary rule, and excluded flight rule. However, the constraints do not invoke the eligible flight rule.

If at least one replacement travel solution is received from schedule server 14, itinerary solver module 46 may cause itinerary analyzer module 44 to analyze each candidate replacement travel solution from the third determination by applying validity conditions, as discussed hereinabove. Each replacement travel solution from the third determination that fails to satisfy at least one of the validity conditions is rejected as invalid (block 320). If at least one replacement travel solution from the third determination is established to be valid, then the process is exited after the third determination for consideration of whether all itineraries with the default solution have been processed (block 308). If either a replacement travel solution is not found by the third determination or none of the replacement travel solutions found by the third determination is valid (i.e., a null result), then the process is also exited after the third determination with an indication that a replacement travel solution was not found for that particular itinerary (block 322). The default travel solution is applied for passengers having the current itinerary. Control is returned to block 308 for consideration of whether all itineraries have been processed.

When control is returned to block 308 at any point in the process, the process flow checks to see if all itineraries with the default travel solution have been processed (block 308). If not, the next itinerary is selected and is analyzed, as described above, to determine if the original itinerary modified to include the default travel solution is valid and, if invalid, to find a replacement travel solution. If all itineraries have been exhausted, then control is transferred to block 324 to determine if all flight dates subject to the schedule change have been considered. If all flight dates have not been considered, then control is transferred to block 302 and the process flow is reinitiated.

If all flight dates have been considered, then control is transferred to block 326 in which an optional validation step with manual override may be applied to the replacement travel solutions. The manual intervention by an airline agent may provide a final validity check on each replacement travel solution in which the replacement travel solutions are displayed to the airline agent. Any new replacement travel solutions entered by the airline agent can be simulated for validity by calling the itinerary analyzer module 44.

The re-accommodation server 12 asynchronously communicates the flights impacted by the schedule change to the reservation server 16. The reservation server 16 searches for the impacted passengers in its database and communicates their identity asynchronously to the inventory server 18. The inventory server 18 retrieves the impacted flight dates in its inventory database and updates the corresponding counters (block 328). The inventory server 18 triggers asynchronously the update of the impacted passengers by the reservation server 16. The reservation server 16 retrieves the PNRs of the impacted passengers from database 240 and updates the retrieved PNRs (block 330). A report is sent from the reservation server 16 back to re-accommodation server 12, which synchronizes the end of all flight dates processed and computes a final report and stores it (block 332).

As will be appreciated by one skilled in the art, aspects of the present invention may be embodied as a system, method, or computer program product. Accordingly, aspects of the present invention may take the form of an entirely hardware embodiment, an entirely software embodiment (including firmware, resident software, micro-code, etc.), or an embodiment combining software and hardware aspects that may all generally be referred to herein as a "module" or "system." Furthermore, aspects of the present invention may take the form of a computer program product embodied in one or more computer readable medium(s) having computer readable program code embodied thereon.

Aspects of the present invention are described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processing unit of a general purpose computer, special purpose computer, or other programmable data processing apparatus to produce a machine, such that the instructions, which execute via the processing unit of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The routines and/or instructions that may be executed by the one or more processing units of each of the servers 12, 14, 16, 18 to implement embodiments of the invention, whether implemented as part of an operating system or a specific application, component, program, object, module, or sequence of operations executed by each processing unit, will be referred to herein as "program modules", "computer program code" or simply "modules" or "program code." Generally, program modules may include routines, programs, objects, components, logic, data structures, and so on that perform particular tasks or implement particular abstract data types. Computer program code for carrying out operations for aspects of the present invention may be written in any combination of one or more programming languages, including an object oriented programming language such as Java, Smalltalk, C++ or the like and conventional procedural programming languages, such as the "C" programming language or similar programming languages. Given the many ways in which computer code may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the embodiments of the invention are not limited to the specific organization and allocation of program functionality described herein.

The flowcharts, block diagrams, and sequence diagrams herein illustrate the architecture, functionality, and operation of possible implementations of systems, methods, and computer program products according to various embodiments of the present invention. In this regard, each block in a flowchart, block diagram, or sequence diagram may represent a segment or portion of program code, which comprises one or more executable instructions for implementing the specified logical function(s) and/or act(s). Program code may be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the blocks of the flowcharts, sequence diagrams, and/or block diagrams herein. In certain alternative implementations, the functions noted in the blocks may occur in a different order than shown and described. For example, a pair of blocks described and shown as consecutively executed may be instead executed concurrently, or the two blocks may sometimes be executed in the reverse order, depending upon the functionality involved. Each block and combinations of blocks can be implemented by special purpose hardware-based systems that perform the specified functions or acts, or combinations of special purpose hardware and computer instructions.

The program code embodied in any of the applications described herein is capable of being individually or collectively distributed as a program product in a variety of different forms. In particular, the program code may be distributed using a computer readable media, which may include computer readable storage media and communication media. Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. Communication media may embody computer readable instructions, data structures or other program modules. By way of example, and not limitation, communication media may include wired media such as a wired network or direct-wired connection, and wireless media such as acoustic, radiofrequency (RF), infrared and other wireless media. Combinations of any of the above may also be included within the scope of computer readable media.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising."

While the invention has been illustrated by a description of various embodiments and while these embodiments have been described in considerable detail, it is not the intention of the applicants to restrict or in any way limit the scope of the appended claims to such detail. Additional advantages and modifications will readily appear to those skilled in the art. The invention in its broader aspects is therefore not limited to the specific details, representative methods, and illustrative examples shown and described. Accordingly, departures may be made from such details without departing from the spirit or scope of applicants' general inventive concept.

## Claims

1. A method of re-accommodating a plurality of passengers, the method comprising:
receiving a schedule change for an impacted flight at a computer reservation system;
retrieving a plurality of original itineraries between an origin location and a destination location that include the impacted flight;
simulating application of a default travel solution that replaces the impacted flight in the original itinerary of each passenger to define a replacement itinerary;
assessing compliance of the replacement itinerary with a plurality of validity conditions; and
if the replacement itinerary fails to comply with at least one of the validity conditions, computing one or more first replacement travel solutions each connecting the origin location with the destination location and each subject to satisfying at least one first constraint on one or more flights comprising each first replacement travel solution.

2. The method of claim 1 further comprising:
if the computation of the one or more first replacement travel solutions returns a null result, computing one or more second replacement travel solutions each connecting the origin location with the destination location and each subject to satisfying at least one second constraint on one or more flights comprising each second replacement travel solution.

3. The method of claim 2 further comprising:
if the second replacement travel solution returns a null result, computing one or more third replacement travel solutions each connecting the origin location with the destination location and each subject to satisfying at least one third constraint on one or more flights comprising each third replacement travel solution.

4. The method of claim 3 wherein the third replacement travel solution departs from the origin location in the original itinerary, arrives at the destination location in the original itinerary, and has the same departure date as the original itinerary, and computing the third replacement travel solution comprises:
replacing all of the flights and the connecting points of the original itinerary in the third replacement travel solution.

5. The method of claim 1 further comprising:
assessing compliance of each first replacement travel solution with the validity conditions; and
rejecting each first replacement travel solution that fails to comply with all of the validity conditions.

6. The method of claim 1 further comprising:
assessing compliance of each first replacement travel solution with the validity conditions; and
if none of the first replacement travel solutions complies with all of the validity conditions, computing one or more second replacement travel solutions each connecting the origin location with the destination location and each subject to satisfying at least one second constraint on one or more flights comprising each second replacement travel solution.

7. The method of claim 6 further comprising:
assessing compliance of each second replacement travel solution with the validity conditions; and
if none of the second replacement travel solutions complies with all of the validity conditions, computing one or more third replacement travel solutions each connecting the origin location with the destination location and each subject to satisfying at least one third constraint on one or more flights comprising each third replacement travel solution.

8. A computer program product comprising:
a computer readable storage medium; and
program instructions for performing the method of claim 1,
wherein the program instructions are stored on the computer readable storage medium.

9. An apparatus comprising:
at least one processor; and
program code configured to be executed by the at least one processor to re-accommodate a plurality of passengers, the program code configured to receive a schedule change for an impacted flight at a computer reservation system, retrieve a plurality of original itineraries between an origin location and a destination location that include the impacted flight, simulate application of a default travel solution that replaces the impacted flight in the original itinerary of each passenger to define a replacement itinerary, assess compliance of each replacement itinerary with a plurality of conditions, and, for each replacement itinerary that fails to comply with at least one of the validity conditions, compute one or more first replacement travel solutions each connecting the origin location with the destination location and each subject to satisfying at least one first constraint on one or more flights comprising each first replacement travel solution.

10. The apparatus of claim 9 wherein the program code is configured to, if the computation of the one or more first replacement travel solutions returns a null result, compute one or more second replacement travel solutions each connecting the origin location with the destination location and each subject to satisfying at least one second constraint on one or more flights comprising each second replacement travel solution.

11. The apparatus of claim 10 wherein the program code is configured to, if the second replacement travel solution returns a null result, compute one or more third replacement travel solutions each connecting the origin location with the destination location and each subject to satisfying at least one third constraint on one or more flights comprising each third replacement travel solution.

12. The apparatus of claim 11 wherein the third replacement travel solution departs from the origin location, arrives at the same destination location as the corresponding original itinerary, and has the same departure date, and the program code configured to compute the one or more third replacement travel solutions comprises:
program code configured to replace all of the flights and the connecting points of the original itinerary in each third replacement travel solution.

13. The apparatus of claim 9 wherein the program code is configured to assess compliance of each first replacement travel solution with the validity conditions and, if none of the first replacement travel solutions complies with all of the validity conditions, compute one or more second replacement travel solutions each connecting the origin location with the destination location and each subject to satisfying at least one second constraint on one or more flights comprising each first replacement travel solution.

14. The apparatus of claim 13 wherein the program code is configured to assess compliance of each second replacement travel solution with the validity conditions and, if none of the second replacement travel solutions complies with all of the validity conditions, compute one or more third replacement travel solutions each connecting the origin location with the destination location and each subject to satisfying at least one third constraint on one or more flights comprising each third replacement travel solution.

15. The apparatus of claim 9 wherein the program code is configured to assess compliance of each first replacement travel solution with the validity conditions, and to reject each first replacement travel solution that fails to comply with all of the validity conditions.
